# EUROPEAN PATENT APPLICATION

(11) **EP 3 428 219 A1**
(43) Date of publication of application: **16.01.2019**
(21) Application number: 17759839.8
(22) Date of filing: 24.02.2017
(51) Int. Cl.: C08J 5/18, B29C 41/12, B32B 27/30, B29K 27/12, B29L 7/00

(54) **FLUORINE-BASED RESIN FILM, LAMINATE, AND METHOD FOR PRODUCING FLUORINE-BASED RESIN FILM**

(30) Priority: 29.02.2016 JP 2016037051; 29.02.2016 JP 2016037052; 15.07.2016 JP 2016140212
(71) Applicant: Toppan Printing Co., Ltd., Tokyo 110-0016 (JP)
(72) Inventor: TANAKA Ryo, Tokyo 110-0016 (JP); JIKUMARU Takashi, Tokyo 110-0016 (JP); HIGASHI Ikuno, Tokyo 110-0016 (JP)
(74) Representative: TBK
(86) International application number: PCT/JP2017/007076
(87) International publication number: WO 2017/150373

(57) **Abstract**

A fluororesin film contains a vinylidene fluoride polymer as a main component. The fluororesin film has ductility at break of 100% or more in all of four different directions of the fluororesin film, and difference in ductility at break between the four directions is 15% or less.

## Description

### [Technical Field]

The present invention relates to a fluororesin film, a laminate including a fluororesin film, and a method of producing a fluororesin film.

This application claims the benefit of priorities from Japanese Patent Application Nos. 2016-037051 and 2016-037052 both filed in Japan on February 29, 2016, and Japanese Patent Application No. 2016-140212 filed in Japan on July 15, 2016, the contents of which are incorporated herein by reference.

### [Background Art]

Interior and exterior finishing materials are generally used for architectural structures (e.g., roofs, wallpaper, sunrooms, and window glass), vehicles (e.g., automobiles, aircrafts, and elevators), signboards, solar batteries, and the like (these materials are termed interior/exterior materials hereinafter). Known interior/exterior materials include materials that are configured by applying a coating to a surface of a substrate made of plastic, rubber, metal, glass or the like, or adhering (laminating) a durable film onto a surface thereof, for the purpose of improving weather resistance, contamination resistance, and chemical resistance, or providing decoration. In particular, fluororesin films, which are a type of durable films, have high weather resistance, contamination resistance, chemical resistance, mechanical strength, and thermoformability, and thus are very often used for the purpose of protecting or decorating substrates, or improving design thereof. For example, vinylidene fluoride is used as a fluororesin.

PTL 1 discloses a synthetic resin exterior material in which an intermediate layer made of an acrylic resin and an outer covering layer made of polyvinylidene fluoride are sequentially laminated on a surface of a base plate (substrate) made of polyvinyl chloride, polycarbonate or the like.

### [Citation List]

### [Patent Literature]

[PTL 1] JP H3-15302 Y

### [Summary of the Invention]

### [Technical Problem]

When producing such an interior/exterior material, a durable film is required to be attached to a surface of the substrate, followed by forming such as press-forming according to the usage. Thus, the durable film is required to have ductility to an extent of following the shape change of the durable film due to forming.

However, ductility of fluororesin films based on conventional art is highly anisotropic. Accordingly, a fluororesin film that has been ensured to have ductility in one direction is not necessarily ensured to have ductility in a different direction. Thus, when an interior/exterior material having a fluororesin film is formed into a complicated shape, the fluororesin film may be broken or the thickness of the material may be varied.

In many cases, durable films are adhered to substrates by thermal lamination. Adhesives suitably used for thermal lamination are hot-melt adhesives (thermoplastic adhesives). However, it is difficult to ensure adhesion between a fluororesin film and a hot-melt adhesive.

In the forming mentioned above, the durable film, which may be stretched in various directions, is required to have low ductility anisotropy when an interior/exterior material is produced.

Durable films used for producing interior/exterior materials are required to have resistance to organic solvents contained in an adhesive or a tackifier (solvent resistance) which is used for bonding a durable film to the substrate.

In the interior/exterior materials of signboards or the like, the substrates (e.g., characters, patterns, or the like drawn on the substrates) are required to be visually recognizable in a state of being covered with durable films. In this case, durable films are required to have transparency.

The present invention has been made in light of the circumstances described above, and has an object of providing a fluororesin film having low ductility anisotropy, a laminate including a fluororesin film having low ductility anisotropy, and a method of producing a fluororesin film.

Furthermore, the present invention has been made in light of the circumstances described above, and has an object of providing a fluorine-based laminated film that can ensure adhesion between a fluororesin film and an adhesive, and a laminate including the fluorine-based laminated film.

Furthermore, the present invention has been made in light of the circumstances described above, and has an object of providing a method of producing a fluororesin film ensuring high ductility, solvent resistance, and transparency, and minimizing ductility anisotropy.

### [Solution to Problem]

A fluororesin film according to a first aspect of the present invention contains a vinylidene fluoride polymer as a main component. The fluororesin film has ductility at break of 100% or more in all of four different directions of the fluororesin film, and difference in ductility at break between the four directions is 15% or less.

The vinylidene fluoride polymer may contain a copolymer obtained by copolymerization of vinylidene fluoride and a second monomer.

The second monomer may be contained in the vinylidene fluoride polymer in the range of 1 part by mass or more and less than 10 parts by mass relative to 100 parts by mass of the entire vinylidene fluoride polymer.

In the fluororesin film according to the above aspect, heat of fusion based on DSC measurement may be in the range of 30 to 40 (J/g).

The fluororesin film according to the above aspect may further contain at least one of an acrylic polymer and a pigment.

A laminate according to a second aspect of the present invention includes a substrate formed into a plate shape or a sheet shape, and the fluororesin film bonded to a surface of the substrate.

A method of producing a fluororesin film according to a third aspect of the present invention includes: applying a coating liquid containing a vinylidene fluoride polymer as a main component onto a substrate; forming a coating film by heating and drying the substrate onto which the coating liquid has been applied; and peeling off the formed coating film from the substrate. In the method, the coating film has difference in ductility at break of 15% or less between four different directions of the coating film.

The substrate may have asperities on a surface onto which the coating liquid is applied, the asperities being for assisting forming the coating film.

A fluorine-based laminated film according to a fourth aspect of the present invention includes: a fluororesin film containing a vinylidene fluoride polymer as a main component; and an adhesive layer provided to a surface of the fluororesin film. In the fluorine-based laminated film, the adhesive layer contains a main resin and a curing agent, the main resin being composed of a thermoplastic adhesive; and the adhesive layer contains 1 to 6 parts by mass of the curing agent relative to 100 parts by mass of the main resin.

The main resin may contain a polyester resin as a main component, and may have a glass transition temperature (Tg) of 40°C or more.

The fluororesin film may contain at least one of an acrylic polymer and a pigment.

A laminate according to a fifth aspect of the present invention includes: a substrate formed into a plate shape or a sheet shape; and the fluorine-based laminated film according to the above aspect bonded to a surface of the substrate.

A method of producing a fluororesin film according to a sixth aspect of the present invention includes preparing a dispersion liquid by dispersing a resin material in a solvent, the resin material being a mixture of a particulate vinylidene fluoride resin having an average primary particle size of 4 µm or less and an acrylic polymer, the solvent containing a first solvent in which the vinylidene fluoride resin is dissolved; and forming a film from the dispersion liquid through a solution casting method. In the method, the resin material contains the vinylidene fluoride resin in the range of more than 60 parts by mass and less than 75 parts by mass, and contains the acrylic polymer in the range of more than 25 parts by mass and less than 40 parts by mass, so that a total of the vinylidene fluoride resin and the acrylic polymer is 100 parts by mass; and when the dispersion liquid is prepared, the solvent contains the first solvent in the range of more than 5 parts by mass and less than 40 parts by mass, so that the prepared dispersion liquid is 100 parts by mass in total.

The first solvent may contain at least one organic solvent selected from N-methylpyrrolidone, methyl ethyl ketone, dimethylacetamide, and N,N-dimethylformamide.

The dispersion liquid may contain 1 to 15 parts by mass of an ultraviolet absorber relative to 100 parts by mass of the total of the vinylidene fluoride resin and the acrylic polymer; and the dispersion liquid may further contain 1 to 5 parts by mass of a hindered amine light stabilizer relative to 10 parts by mass of the ultraviolet absorber.

After the film is formed from the dispersion liquid, an adhesive layer may be provided to at least one surface of a fluororesin film that is the film.

The adhesive layer may have a thickness in the range of 1 to 10 µm.

The adhesive layer may contain a polyester resin as a main component, and may contain 1 to 5 parts by mass of an isocyanate compound relative to 100 parts by mass of the polyester resin.

### [Advantageous Effects of the Invention]

According to the aspects of the present invention set forth above, a fluororesin film having low ductility anisotropy can be provided.

According to the aspects of the present invention set forth above, adhesion can be ensured between the fluororesin film and the adhesive layer.

According to the aspects of the present invention set forth above, high ductility, solvent resistance, and transparency can be ensured in the fluororesin film, and ductility anisotropy can be minimized therein.

### [Brief Description of the Drawings]

Fig. 1 is a diagram illustrating a method of cutting four specimens from a fluororesin film, for use in measuring ductility at break.
Fig. 2 is a diagram illustrating a configuration for evaluating blocking of a fluorine-based laminated film according to a second embodiment of the present invention, i.e., a diagram corresponding to PVDF/adhesive of Table 6.
Fig. 3 is a diagram illustrating a configuration for evaluating blocking of a fluorine-based laminated film according to a second embodiment of the present invention, i.e., a diagram corresponding to OPP/adhesive of Table 6.
Fig. 4 is a diagram illustrating a configuration for evaluating blocking of a fluorine-based laminated film according to a second embodiment of the present invention, i.e., a diagram corresponding to PET/adhesive of Table 6.

### [Description of the Embodiments]

### «Fluororesin film»

A fluororesin film according to a first embodiment of the present invention can be used by being bonded to a surface of a substrate used for an interior/exterior material or the like. The substrate may be of any type. Specifically, a wide variety of materials may be used for the substrate. Examples of the materials include plastic materials such as polycarbonate (PC), polyethylene terephthalate (PET), and polymethylmethacrylate (PMMA); rubber materials such as ethylene propylene rubber (EPDM) and chlorosulfonated polyethylene (CSM); metallic materials such as aluminum and stainless steel; wood; and glass.

The fluororesin film of the present embodiment contains a vinylidene fluoride polymer (termed PVDF hereinafter) as a main component. In the fluororesin film of the present embodiment, ductility at break is 100% or more in all of four different directions (0°, 45°, 90°, 135°), and difference in ductility at break between the four directions is 15% or less. The expression "difference in ductility at break between the four directions is 15% or less" refers to the ratio obtained by dividing a difference between the greatest and smallest values of ductility at break among the values thereof in four directions by the smallest value of ductility at break being 15% or less.

PVDF contains at least a copolymer. Specifically, PVDF may be composed, for example, of only a copolymer, or may contain, for example, both of a copolymer and a homopolymer.

The copolymer contains vinylidene fluoride (VDF) and one or more other monomers that are copolymerizable with VDF. Examples of other monomers include perfluoro-olefin such as hexafluoropropylene (HFP), tetrafluoroethylene (TFE), and perfluoro (alkyl vinyl ether) (PAVE); and chlorotrifluoroethylene (CTFE). Of these materials, HFP is more preferred from the viewpoint of chemical resistance.

The homopolymer is composed of only VDF.

Monomers other than VDF (other monomers) are preferably contained in the range of 1 part by mass or more and less than 10 parts by mass, and more preferably 2 parts by mass or more to 8 parts by mass or less, relative to 100 parts by mass of the entire PVDF. When PVDF contains 1 part by mass or more of monomers other than VDF, breaking strength of the fluororesin film is easily retained. When PVDF contains less than 10 parts by mass of monomers other than VDF, the fluororesin film to be formed may have high chemical resistance.

The fluororesin film of the present embodiment may have heat of fusion in the range of 30 to 40 (J/g). The heat of fusion of the fluororesin film is obtained in terms of heat quantity at the endothermic peak of temperature rise during DSC (differential scanning calorimetry) measurement. If the heat of fusion is 30 J/g or more, the fluororesin film formed will have high chemical resistance. If the heat of fusion is 40 J/g or less, breaking strength of the fluororesin film is easily retained. Heat of fusion is derived from the crystal in PVDF and varies depending on crystallinity. In particular, heat of fusion can be adjusted by the content of VDF in PVDF. For example, as the content of VDF in PVDF increases, crystallinity increases and thus heat of fusion increases. Heat of fusion can also be controlled by a cooling method that follows film forming. Specifically, heat of fusion increases by slow cooling, but decreases by rapid cooling.

The fluororesin film of the present embodiment may contain an acrylic polymer.

Specific examples of the acrylic polymer include polymethylmethacrylate (PMMA). PMMA is a homopolymer of methyl methacrylate, a copolymer of methyl methacrylate and a monomer copolymerizable therewith, a mixture of a homopolymer of polymethylmethacrylate and acrylic rubber, or a mixture of the above copolymer and acrylic rubber. Specific examples of the copolymerizable monomer include methacrylate ester having 2 to 4 carbons, acrylic acid ester having 1 to 8 carbons such as butyl acrylate, styrene, α-methylstyrene, atarylonitrile, acrylic acid, and other ethylenically unsaturated monomers.

The fluororesin film of the present embodiment may contain a pigment.

The pigment is a material for coloring the fluororesin film or the like. The pigment may be added to the fluororesin film for the purpose of imparting weather resistance thereto. For example, the pigment may be an organic pigment or an inorganic pigment. Examples of the organic pigment include pigments of the azo, phthalocyanine, quinacridone, anthraquinone, dioxazine, indigo/thioindigo, perinone-perylene, or isoindolenine series. Examples of the inorganic pigment include pigments of the carbon black, titanium oxide, cadmium, lead, or fromium oxide series. Specific examples of a white pigment for imparting weather resistance may be titanium oxide, calcium carbonate, and the like. Also, specific examples of a black pigment for imparting weather resistance may be carbon black, and the like. When the fluororesin film is colored, it is preferred to use a white pigment together with a chromatic pigment to improve weather resistance.

The content of the pigment in the fluororesin film for retaining ductility thereof varies depending on the usage of the film, but may preferably be 30% or less, and more preferably 20% or less, in terms of mass ratio in the fluororesin film. When a white pigment and/or a black pigment is added for the purpose of imparting weather resistance, the amount of addition is preferably in the range of 5% or more and 15% in terms of mass ratio in the fluororesin film, from the viewpoint of enhancing the effects.

To improve adhesion to an adhesive or other materials, surface treatment, such as corona treatment, plasma treatment, or adhesion-enhancing layer coating treatment, may be applied to the fluororesin film of the present embodiment.

### «Method of producing fluororesin film»

The fluororesin film of the present embodiment is produced by a solution casting method, for example, as described below.

First, an application liquid (coating liquid) containing a resin material whose main component is PVDF is prepared. In the application liquid, a particulate resin material is dispersed in the solvent. Then, the application liquid is applied to a predetermined base surface to form a film. Subsequently, the particulate resin material is melted in an oven and the solvent is evaporated. Then, the applied film (coating film) is peeled off to obtain a fluororesin film of the present embodiment.

The solvent used in the solution casting method may, for example, be an organic solvent such as N-methylpyrrolidone (NMP), methyl ethyl ketone (MEK), dimethylacetamide (DMAC), N,N-dimethylformamide, or diethylene glycol monobutyl ether (DEB), considering solubility and dispersibility of the resin material.

Alternatively, a mixed solvent may be used in which at least one or more organic solvents from among NMP, MEK, DMAC, and N,N-dimethylformamide are mixed with DEB.

The fluororesin film of the present embodiment may be bonded to a surface of a substrate formed into a plate or sheet shape. Specifically, the fluororesin film of the present embodiment may constitute a laminate together with the substrate. The substrate may be formed of various materials (e.g., a stretched resin film such as of polyvinyl chloride, polycarbonate, or polyethylene terephthalate) used for interior/exterior materials or the like. In such a case, the laminate may be formed by adhering the substrate used for forming to the film, instead of separating the substrate from the film, or the laminate may be formed via an adhesive layer.

The substrate used in the solution casting method preferably has heat resistance to such an extent of not being deformed by heating when dried. For example, a stretched resin film may be used as the substrate. In particular, biaxially-stretched polyethylene terephthalate is preferred from the viewpoint of heat resistance.

Using a substrate having asperities on its surface, as a substrate to which the application liquid is applied, in the solution casting method, surface forming such as matte processing can be applied to the surface of the fluororesin film to be produced. Such a substrate having asperities on its surface may be a matte substrate with a filler added thereto, a substrate having a sandblasted surface, or a substrate with a layer formed into a desired shape being applied to a surface thereof.

In the fluororesin film of the present embodiment, ductility at break is 100% or more in all of four different directions, and difference in ductility at break between the four directions is 15% or less. Specifically, the fluororesin film of the present embodiment has sufficient ductility as a film bonded to a press-formed substrate, and has minimal ductility anisotropy as compared with conventional fluororesin films. Accordingly, breakage of the fluororesin film can appropriately be prevented or reduced even when subjected to forming processing such as press forming (forming into a complicated shape in particular) in a state of being bonded to the surface of the substrate used for an interior/exterior material or the like. Accordingly, laminates, such as interior/exterior materials, which include the fluororesin film of the present embodiment, have good formability and chemical resistance and can be appropriately used.

In the fluororesin film of the present embodiment, PVDF which is a main component of the fluororesin film contains a monomer other than VDF. Therefore, ductility at break of the fluororesin film in all of four different directions can reliably be 100% or more.

In the method of producing a fluororesin film of the present embodiment, the fluororesin film is produced by a solution casting method. By producing the fluororesin film through a solution casting method, anisotropy of the fluororesin film can be minimized and difference in ductility at break between the four directions is reliably 15% or less.

In the fluororesin film of the present embodiment, heat of fusion based on DSC measurement is in the range of 30 to 40 (J/g). Thus, ductility at break in all of the four different directions is reliably rendered to be 100% or more, and chemical resistance can also be ensured.

For example, if the heat of fusion of the fluororesin film is less than 30 (J/g), crystallinity of PVDF becomes excessively low, and accordingly chemical resistance is unlikely to be ensured. If the heat of fusion of the fluororesin film is more than 40 (J/g), crystallinity of PVDF becomes excessively high, and accordingly ductility at break in any of the four directions is unlikely to be 100% or more.

### «Fluorine-based laminated film»

A fluorine-based laminated film according to a second embodiment of the present invention is bonded to a surface of a substrate used for interior/exterior materials or the like. The substrate may be of any type. Specifically, a wide variety of materials may be used for the substrate. Examples of the materials include plastic materials such as polycarbonate (PC), polyethylene terephthalate (PET), and polymethylmethacrylate (PMMA); rubber materials such as ethylene propylene rubber (EPDM) and chlorosulfonated polyethylene (CSM); metallic materials such as aluminum and stainless steel; wood; and glass.

The fluorine-based laminated film of the present embodiment includes a fluororesin film and an adhesive layer provided to a surface of the fluororesin film.

The fluororesin film contains a vinylidene fluoride polymer (termed PVDF hereinafter) as a main component. For example, PVDF may contain one or both of a copolymer and a homopolymer.

The copolymer contains vinylidene fluoride (VDF) and one or more other monomers that are copolymerizable with VDF. Examples of other monomers include perfluoro-olefin such as hexafluoropropylene (HFP), tetrafluoroethylene (TFE), and perfluoro (alkyl vinyl ether) (PAVE); and chlorotrifluoroethylene (CTFE). Of these materials, HFP is more preferred from the viewpoint of chemical resistance.

The homopolymer is composed of only VDF.

The fluororesin film of the first embodiment may be used as the fluororesin film for the fluorine-based laminated film of the present embodiment.

Monomers other than VDF (other monomers) are preferably contained in the range of 1 part by mass or more and less than 10 parts by mass, and more preferably 2 parts by mass or more to 8 parts by mass or less, relative to 100 parts by mass of the entire PVDF. When PVDF contains 1 part by mass or more of monomers other than VDF, breaking strength of the fluororesin film is easily retained. When PVDF contains less than 10 parts by mass of monomers other than VDF, the fluororesin film to be formed may have high chemical resistance.

For example, the fluororesin film may contain an acrylic polymer.

Specific examples of the acrylic polymer include polymethylmethacrylate (PMMA) as with the first embodiment. Description of PMMA and specific examples of the copolymerizable monomer are similar to those of the first embodiment and mention is omitted below.

For example, the fluororesin film may contain a pigment.

The pigment is a material for coloring the fluororesin film or the like.

As the pigment used for the fluororesin film of the present embodiment, materials similar to those which are mentioned in the first embodiment may be used.

The content of the pigment in the fluororesin film of the present embodiment may be the same mass ratio used for the content of the pigment mentioned in the first embodiment.

The adhesive layer contains a main resin and a curing agent, with main resin being composed of a thermoplastic adhesive. The adhesive layer contains 1 to 6 parts by mass of the curing agent relative to 100 parts by mass of the main resin.

For example, the main resin may be a material containing a polyester resin as a main component, or may be a material containing a polyether resin or an olefin resin as a main component. The main resin may have a glass transition temperature (Tg), for example, of 40°C or more. The main resin may have a glass transition temperature (Tg), for example, of 50°C or more.

The curing agent is preferably, for example, an isocyanate compound. The isocyanate used as the curing agent may be an aliphatic isocyanate or an aromatic isocyanate. As the isocyanate that can be used, mention can be made of various isocyanate curing agents such as tolylene diisocyanate (TDI), diphenylmethane diisocyanate (MDI), hexamethylene diisocyanate (HDI), isophorone diisocyanate (IPDI), xylylene diisocyanate (XDI), and the like, or mixtures of these materials. In particular, XDI curing agents are preferred because of having both of reactivity as aromatic isocyanate and weather resistance as aliphatic isocyanate. Of the XDI curing agents, hydrogenated xylylene diisocyanate (H6XDI) is advantageous in a production process because of having a long pot life.

The adhesive layer only needs to have a thickness of smaller than that of the fluororesin film. For example, when the thickness of the fluororesin film is 50 µm, the thickness of the adhesive layer may be in the range of 1 to 5 µm.

To further improve adhesion to an adhesive or other materials, surface treatment, such as corona treatment, plasma treatment, or adhesion-enhancing layer coating treatment, may be applied to the fluororesin film of the present embodiment. The surface treatment increases functional groups, including hydroxyl groups, on the surface of the fluororesin film, accelerating a reaction between the fluororesin film and the curing agent and improving adhesion between the fluororesin film and the adhesive layer.

### «Method of producing fluorine-based laminated film»

The fluorine-based laminated film of the present embodiment is produced, for example, as described below.

First, a fluororesin film is produced. The fluororesin film may be produced, for example, by extrusion (method of extruding a melted resin from a discharge port of an extrusion die). In the present embodiment, however, the fluororesin film is produced through a solution casting method as with the first embodiment. When the fluororesin film is produced through a solution casting method, first, an application liquid (coating liquid) containing a resin material whose main component is PVDF is prepared. In the application liquid, a particulate resin material is dispersed in the solvent. Then, the application liquid is applied to a predetermined base surface to form a film. Subsequently, the particulate resin material is melted in an oven and the solvent is evaporated. Then, an applied film (coating film) is peeled off to thereby obtain a fluororesin film.

The solvent used in the solution casting method of the present embodiment may be a solvent similar to that of the first embodiment. Description of the solvent used in the solution casting method of the present embodiment is omitted to avoid duplication with the first embodiment.

Subsequently, an adhesive layer is formed by applying an adhesive with a predetermined thickness to a surface of the fluororesin film, thereby obtaining the fluorine-based laminated resin film of the present embodiment.

In the above production method, for example, surface treatment such as corona treatment may be applied to the surface of the fluororesin film prior to application of the adhesive thereto, so that hydroxyl groups (OH groups) appear on the surface of the fluororesin film. By applying a surface treatment to the surface of the fluororesin film to which the adhesive layer is applied, adhesion between the fluororesin film and the adhesive layer can be enhanced.

In the fluorine-based laminated film of the present embodiment, the adhesive layer contains 1 to 6 parts by mass of the curing agent relative to 100 parts by mass of the main resin. Accordingly, adhesion between the fluororesin film and the adhesive layer can be ensured.

In the fluorine-based laminated film of the present embodiment, when the glass transition temperature (Tg) of the main resin is 40°C or more, viscoelasticity of the adhesive layer can be minimized at a normal temperature (e.g., 25°C). Thus, the fluorine-based laminated film can be easily handled.

In the fluorine-based laminated film of the present embodiment, when the glass transition temperature (Tg) of the main resin is 50°C or more, ease of handling the fluorine-based laminated film is further improved.

Specifically, even when such fluorine-based laminated films are stacked one on top of the other by being taken up in roll form, these stacked fluorine-based laminated films can be easily separated from each other. Accordingly, such fluorine-based laminated films taken up in roll form can be stored at a normal temperature without interposition of a material such as separator paper.

The fluorine-based laminated films taken up in this way can reduce the roll diameter as compared with the films of the same length taken up with separator paper being interposed therebetween. Thus, the fluorine-based laminated films can be stored in a compact size.

The fluorine-based laminated film of the present embodiment may be bonded to a surface of a substrate formed into a plate or sheet shape. Specifically, the fluorine-based laminated film of the present embodiment may constitute a laminate together with a substrate. The substrate may be formed of various materials (e.g., polyvinyl chloride, polycarbonate, and the like) used for interior/exterior materials or the like. In such a case, the laminate may be formed by adhering the substrate used for forming the film to the film, instead of separating the substrate from the film, or the laminate may be formed via an adhesive layer. By laminating the substrate on an adhesive layer side of the fluororesin film (on the adhesive layer), followed by thermal lamination at a temperature of not less than a melting point of the adhesive layer, a laminate having high peel strength and high reliability can be obtained.

The fluorine-based laminated film of the present embodiment and the laminate including the fluorine-based laminated film may be prepared by using the fluororesin film of the first embodiment.

### «Fluororesin film»

A fluororesin film according to a third embodiment of the present invention can be used by being bonded to a surface of a substrate used for an interior/exterior material or the like. The substrate may be of any type. As the material used for the fluororesin film of the present embodiment, materials similar to those which are mentioned in the first embodiment may be used. Therefore, no mention is made of them in the following description.

The fluororesin film of the present embodiment contains a vinylidene fluoride resin (termed VDF hereinafter) and an acrylic polymer.

VDF is a homopolymer.

Specific examples of the acrylic polymer include polymethylmethacrylate (PMMA) as with the first embodiment. Description of PMMA and specific examples of the copolymerizable monomer are similar to those of the first embodiment and mention is omitted below.

The fluororesin film of the present embodiment contains VDF in the range of more than 60 parts by mass and less than 75 parts by mass, and contains an acrylic polymer in the range of more than 25 parts by mass and less than 40 parts by mass, so that the total of VDF and the acrylic polymer is 100 parts by mass.

If the resin material contains 60 parts by mass or less of VDF relative to 100 parts by mass of the total of VDF and the acrylic polymer, the content of the acrylic polymer having lower solvent resistance than VDF becomes high. Therefore, the fluororesin film is less likely to have sufficient solvent resistance. If the resin material contains 75 parts by mass or more of VDF relative to 100 parts by mass of the total of VDF and the acrylic polymer, the content of the acrylic polymer becomes excessively small. Therefore, the fluororesin film is likely to have lower transparency. Specifically, the resin material containing VDF in the range of more than 60 parts by mass and less than 75 parts by mass relative to 100 parts by mass of the total of VDF and the acrylic polymer enables the fluororesin film to have sufficient solvent resistance and transparency.

The fluororesin film having transparency herein means that the ratio of light dispersed in the fluororesin film is low in light passing therethrough. Specifically, a lower ratio of light dispersed within the fluororesin film imparts higher transparency to the fluororesin film, and thus means easier visual recognition of the other side of the fluororesin film.

For example, the fluororesin film may contain only VDF and the acrylic polymer mentioned above, or may contain a different resin material or additive in addition to the VDF and the acrylic polymer.

Examples of the additive include an ultraviolet absorber (UVA) and a hindered amine light stabilizer (HALS). Examples of the UVA include a material that contains one or more of benzotriazole-based ultraviolet absorbers and triazine-based ultraviolet absorbers. When the fluororesin film contains UVA, the content of the UVA is preferably in the range of 1 part by mass or more and 15 parts by mass or less relative to 100 parts by mass of the total of VDF and the acrylic polymer.

If the content of UVA in the fluororesin film is less than 1 part by mass, the fluororesin film is less likely to yield the effect of absorbing ultraviolet light. If the content of UVA in the fluororesin film is more than 15 parts by mass, the fluororesin film is likely to have lower visible light transmittance. Specifically, when the content of UVA in the fluororesin film is in the range of 1 part by mass or more and 15 parts by mass or less, the effect of absorbing ultraviolet is reliably yielded in the fluororesin film and visible light transmittance is sufficiently ensured in the fluororesin film.

When the fluororesin film contains UVA and HALS, the content of HALS in the fluororesin film is preferably in the range of 1 part by mass or more and 5 parts by mass or less relative to 10 parts by mass of UVA.

If the content of HALS in the fluororesin film is less than 1 part by mass, the effect of the HALS (radical scavenging ability as a light stabilizer) is less likely to be yielded. If the content of HALS in the fluororesin film is more than 5 parts by mass, the HALS may be precipitated and the transparency of the fluororesin film is likely to be lowered. Specifically, when the content of HALS in the fluororesin film is in the range of 1 part by mass or more and 5 parts by mass or less, the effect of the HALS is reliably yielded, and precipitation of the HALS is reduced or prevented to achieve sufficient transparency in the fluororesin film.

### «Method of producing fluororesin film»

Description hereinafter will be given of a method of producing a fluororesin film of the present embodiment.

First, a resin material is prepared by mixing a particulate vinylidene fluoride resin (VDF) and an acrylic polymer, and this resin material is dispersed in a solvent containing a good solvent (first solvent) for VDF (preparation step) to thereby prepare a dispersion liquid (preparation step).

In the preparation step, the particulate VDF has an average primary particle size of 4 µm or less. If the average primary particle size is more than 4 µm, the particulate VDF is likely to be unevenly dispersed in the dispersion liquid. Specifically, VDF having the average primary particle size of 4 µm or less can achieve homogeneous dispersion of the particulate VDF in the dispersion liquid.

The resin material contains VDF in the range of more than 60 parts by mass and less than 75 parts by mass, and contains an acrylic polymer in the range of more than 25 parts by mass and less than 40 parts by mass of, so that the total of VDF and the acrylic polymer is 100 parts by mass.

The resin material may contain a different resin material in addition to the VDF and the acrylic polymer.

In the preparation step, the good solvent contained in the solvent is not particularly limited but only needs to have high solubility of VDF (VDF is easily dissolved) as compared with at least another solvent contained in the solvent (termed a different solvent (second solvent) hereinafter) other than the good solvent. In the present embodiment, the good solvent contained in the solvent is an organic solvent containing one or more of N-methylpyrrolidone (NMP), methyl ethyl ketone (MEK), dimethylacetamide (DMAC), and N,N-dimethylformamide. The good solvent for VDF may be referred to herein as a "good solvent", a "first solvent in which VDF is dissolved", or a "first solvent".

The solvent contains the good solvent in the range of more than 5 parts by mass and less than 40 parts by mass, so that the whole solvent is 100 parts by mass.

If the good solvent contained in the solvent is 5 parts by mass or less, dispersion of the VDF in the dispersion liquid is likely to be insufficient. Specifically, particulate VDF in the dispersion liquid is likely to be unevenly dispersed. If the good solvent contained in the solvent is 40 parts by mass or more, the good solvent excessively acts on VDF to excessively dissolve VDF. Accordingly, viscosity of the dispersion liquid excessively increases. Therefore, it will be difficult to form a film from the dispersion liquid (to form the dispersion liquid into a film) through the solution casting method in a film formation step (step of forming a film) described later. Specifically, the solvent containing the good solvent in the range of more than 5 parts by mass and less than 40 parts by mass relative to 100 parts by mass of the entire solvent achieves homogeneous dispersion of particulate VDF in the dispersion liquid and easy formation of a film from the dispersion liquid in the film formation step.

The different solvent contained in the solvent is not particularly limited but only needs to have lower solubility of VDF (VDF is poorly soluble) as compared at least with the good solvent. For example, the different solvent may be one enabling appropriate dispersion of particulate VDF in the dispersion liquid. The different solvent may, for example, be diethylene glycol monobutyl ether (DEB), or the like.

For example, the solvent may have a boiling point that is higher than the melting point of VDF. In such a case, when the dispersion liquid is heated for evaporation of the solvent in the film formation step (described later), the solvent is prevented from being completely evaporated before complete dissolution of VDF.

For example, the boiling point of the solvent may be lower than the boiling point of VDF. In such a case, when the dispersion liquid is heated for evaporation of the solvent in the film formation step, evaporation of VDF is appropriately reduced or prevented.

In addition to the resin materials and solvents mentioned above, the dispersion liquid may further contain, for example, an additive such as an ultraviolet absorber (UVA) and a hindered amine light stabilizer (HALS). When the dispersion liquid contains UVA, the content of UVA is preferably in the range of 1 part by mass or more and 15 parts by mass or less relative to 100 parts by mass of the total of VDF and the acrylic polymer. When the dispersion liquid contains UVA and HALS, the content of HALS is preferably in the range of 1 part by mass or more and 5 parts by mass or less relative to 10 parts by mass of UVA.

In the preparation step, the resin materials, solvents, and the like mentioned above are mixed and stirred at a normal temperature, for example, to obtain a dispersion liquid.

The preparation step is followed by the film formation step of forming a film from the dispersion liquid using a solution casting method to complete production of the fluororesin film of the present embodiment. In the film formation step, an application step is performed, first, in which the dispersion liquid is applied to a predetermined base surface to form an applied film (coating film). Subsequently, a drying step is performed in which the applied film is dried in an oven or the like to melt the particulate VDF and evaporate the solvent, thereby obtaining a fluororesin film of the present embodiment.

In the above method of producing a fluororesin film, for example, the film formation step may be followed by an adhesive layer formation step of providing an adhesive layer to one or both of the surfaces of the fluororesin film. Thus, a fluororesin film including the adhesive layer is obtained.

For example, the adhesive layer may have a thickness in the range of 1 µm or more and 10 µm or less.

For example, the adhesive layer may contain a polyester resin as a main component. For example, the polyester resin forming the adhesive layer may be a polyester hot-melt adhesive, or the like. The polyester hot-melt adhesive exhibits good adhesion to a substrate such as of PC and PET.

The adhesive layer may contain an isocyanate compound in the range of 1 part by mass or more and 5 parts by mass or less relative to 100 parts by mass of the polyester resin. By adding an isocyanate compound to the polyester resin, adhesion is improved between the fluororesin film and the adhesive layer.

Thus, a fluororesin film including an adhesive layer can improve adhesion between the substrate and the fluororesin film. For example, even when forming processing such as press forming is performed after bonding the fluororesin film to the substrate, separation of the fluororesin film from the substrate can be appropriately reduced or prevented.

In the method of producing a fluororesin film stated above, a surface treatment step such as corona treatment, plasma treatment, or adhesion-enhancing layer coating treatment may be conducted between the film formation step and the adhesive layer formation step or the like, for example, with respect to one or both of the surfaces of the fluororesin film to improve adhesion to the adhesive or other materials.

As described above, the method of producing a fluororesin film of the present embodiment can ensure high ductility, solvent resistance, and transparency and minimizes ductility anisotropy in a produced fluororesin film.

Specifically, the fluororesin film of the present embodiment is produced through a solution casting method. Use of this method can minimize ductility anisotropy in the fluororesin film as compare, for example, with the case where a fluororesin film is produced through an extrusion method (method of extruding melted resin from a discharge port of an extrusion die).

The fluororesin film of the present embodiment contains more than 60 parts by mass of VDF relative to 100 parts by mass of the total of VDF and an acrylic polymer, while the VDF has higher solvent resistance (e.g., resistance to chemical agent such as toluene or ethyl acetate contained in an adhesive or the like) than does the acrylic polymer. Thus, sufficient solvent resistance is ensured as a fluororesin film.

The fluororesin film of the present embodiment contains more than 25 parts by mass of an acrylic polymer relative to 100 parts by mass of the total of VDF and the acrylic polymer, while the acrylic polymer contributes to improving transparency of the fluororesin film as compared with VDF.

The method of producing a fluororesin film of the present embodiment includes the preparation step in which VDF has an average primary particle size of 4 µm or less, and the solvent contains 10 parts by mass or more of a good solvent relative to 100 parts by mass of the entire solvent. Thus, homogeneous dispersion of particulate VDF is achieved in the dispersion liquid, and transparency is prevented from being locally lowered in the produced fluororesin film.

Resultantly, sufficient transparency is ensured in a produced fluororesin film.

The fluororesin film of the present embodiment contains more than 25 parts by mass of an acrylic polymer relative to 100 parts by mass of the total of VDF and the acrylic polymer, while the acrylic polymer contributes to improving ductility of the fluororesin film as compared with VDF. Thus, higher ductility is ensured in a fluororesin film.

The method of producing a fluororesin film according to the third embodiment of the present invention has been described. The fluororesin film obtained in the present embodiment may be used in the first or second embodiment.

### Examples

The advantageous effects stated above will be more specifically described hereinafter by way of examples, but the present invention should not be limited to the following description.

### <Samples of Table 1>

In the examples, five fluororesin film samples (Examples 1 to 3, and Comparative Examples 1 and 2) shown in Table 1 were used.

In four samples (Examples 1 to 3, and Comparative Example 1) shown in Table 1, "Kynar 761A" manufactured by Arkema K.K. was used as a homopolymer of PVDF, i.e., a main component of the fluororesin film, and "Kynarflex" (copolymer of VDF and HFP (second monomer)) manufactured by Arkema K.K. was used as a copolymer of PVDF. The amount of HFP contained in PVDF was adjusted by adjusting the formulation ratio of the homopolymer and the copolymer. The four fluororesin film samples were permitted to contain PMMA as an acrylic polymer (acryl) and titanium oxide as a pigment.

**[Table 1]**

| | Vinylidene fluoride polymer | | Acryl | Pigment |
|---|---|---|---|---|
| | VDF | HFP | PMMA | Titanium oxide |
| Comparative Example 1 | 100 | 0 | 10 | 10 |
| Example 1 | 97 | 3 | 10 | 10 |
| Example 2 | 93 | 7 | 10 | 10 |
| Example 3 | 90 | 10 | 10 | 10 |
| Comparative Example 2 | - | - | - | - |

| | | | | |
|---|---|---|---|---|
| Unit: parts by mass | | | | |

In Table 1, the components contained in the four fluororesin film samples are indicated in terms of parts by mass.

Specifically, in the four samples, the parts by mass ratios of VDF and HFP are determined so as to be 100 parts by mass in total (parts by mass ratio of the entire PVDF). The four samples have different formulation ratios of VDF and HFP. Each sample of the fluororesin film contains an acrylic polymer and a pigment each at an amount of 10 parts by mass relative to 100 parts by mass of PVDF.

In the examples, the four fluororesin film samples (Examples 1 to 3, and Comparative Example 1) shown in Table 1 were prepared with a thickness of 50 µm through the solution casting method stated above.

Another sample (Comparative Example 2) shown in Table 1, i.e. a fluororesin film made of polyvinyl fluoride (PVF), was prepared with a thickness of 50 µm by extrusion (method of extruding melted resin from a discharge port of an extrusion die).

The ductility at break of the fluororesin film samples was measured, chemical resistance was evaluated, and heat of fusion was measured.

### <Method of measuring ductility at break>

Specimens were cut out each with a size of 25-mm width × 125-mm length from the fluororesin film samples. For the cut-out specimens, ductility at break was measured at a temperature of 23 ± 2°C and a humidity of 50 ± 5 %RH with a gauge length of 50 mm and at a speed of 50 mm/min.

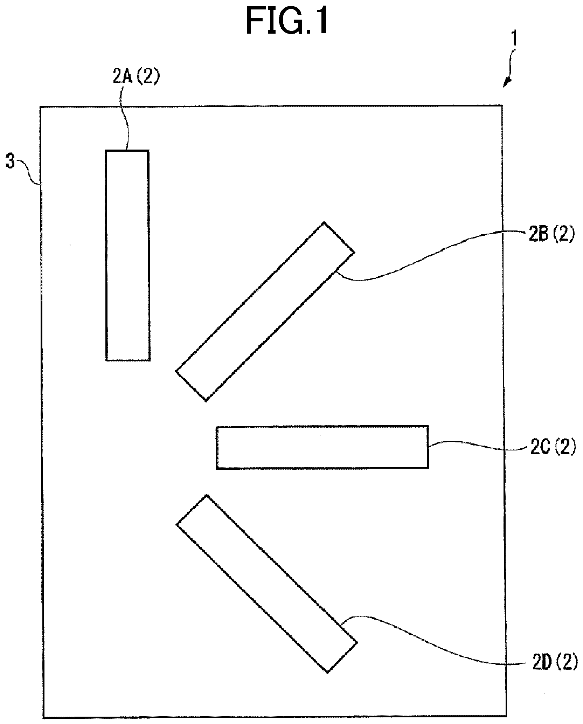

For each sample, four specimens were prepared for use in the measurement of ductility at break. As shown in Fig. 1, four specimens 2 (2A to 2D) were cut out from a single fluororesin film 1 along respective length directions different from each other in the single fluororesin film 1. Specifically, the four specimens prepared were: a first specimen 2A (angle of 0°) with the length direction parallel to a side 3 of the fluororesin film 1; a second specimen 2B with the length direction inclined at an angle of 45° relative to the side 3 of the fluororesin film 1; a third specimen 2C with the length direction inclined at an angle of 90° relative to the side 3 of the fluororesin film 1; and a fourth specimen 2D with the length direction inclined at an angle of 135° relative to the side 3 of the fluororesin film 1.

For the sample of Comparative Example 2 prepared by extrusion, four specimens 2A to 2D were prepared from a fluororesin film 1 having a side 3 whose direction matched the extruding direction.

### <Method of evaluating chemical resistance>

Specimen were cut out each with a size of 15-mm width × 150-mm length from the fluororesin film samples. For the cut-out specimens, chemical resistance was evaluated by appearance observation (visual observation) after being immersed in acetone or methyl ethyl ketone (MEK) for 1 hour at a temperature of 23 ± 2°C and a humidity of 50 ± 5 %RH. The following evaluation criteria were used, with A taken to be nondefective.
A: No appearance change was observed.
B: Wrinkling was observed.
C: Elution was observed.

### <Measurement of heat of fusion>

Heat of fusion was measured based on DSC measurement at a temperature rise rate of 10°C/min and in a measurement temperature range of 0 to 200°C. Heat of fusion was calculated from the resultant graph.

Table 2 shows measurements of ductility at break, evaluations of chemical resistance, and measurements of heat of fusion for five fluororesin film samples (Examples 1 to 3, and Comparative Examples 1 and 2).

**[Table 2]**

| | Ductility at break (%) | | | | Chemical resistance | | Heat of fusion (J/g) |
|---|---|---|---|---|---|---|---|
| | 0° | 45° | 90° | 135° | Acetone | MEK | |
| Comparative Example 1 | 30 | 35 | 30 | 40 | A | A | 41.8 |
| Example 1 | 160 | 170 | 150 | 160 | A | A | 36.4 |
| Example 2 | 270 | 260 | 280 | 260 | A | A | 31.2 |
| Example 3 | 400 | 380 | 370 | 380 | C | B | 27.7 |
| Comparative Example 2 | 160 | 90 | 80 | 100 | A | A | - |

As shown in Table 2, in Comparative Example 2 prepared by extrusion, difference in ductility at break between the four different directions (0°, 45°, 90°, 135°) was 100%. In the samples (Examples 1 to 3, and Comparative Example 1) prepared by the solution casting method, differences in ductility at break between the four directions were all 35% or less. Thus, the fluororesin film, when prepared by the solution casting method, can reduce ductility anisotropy.

In Comparative Example 1 prepared by the solution casting method and containing PVDF composed of only VDF, difference in ductility at break between the four directions was 33%. In Examples 1 to 3 prepared by the solution casting method and containing PVDF that contained HFP, differences in ductility at break between the four directions were all 15% or less. Thus, the fluororesin film, with the main component of PVDF containing HFP, can further reduce ductility anisotropy.

In Comparative Examples 1 and 2, ductility at break in all or some of the four directions was less than 100%. In Examples 1 to 3, ductility at break in all the four directions was 100% or more. Thus, according to the fluororesin films of Examples 1 to 3, when the films were prepared by the solution casting method and contained the main component of PVDF that contained HFP, ductility at break in all the four directions of each fluororesin film was 100% or more.

As shown in Table 2, Comparative Example 1 whose heat of fusion was more than 40 (J/g) exhibited satisfactory chemical resistance but showed less than 100% ductility at break in all the four directions. Example 3 whose heat of fusion was less than 30 (J/g) showed 100% or more ductility at break in all the four directions but exhibited unsatisfactory chemical resistance. Examples 1 and 2 whose heat of fusion was in the range of 30 to 40 (J/g) showed 100% or more ductility at break in all the four directions and also exhibited satisfactory chemical resistance. Thus, according to the fluororesin film of Examples 1 to 3, if heat of fusion was in the range of 30 to 40 (J/g), ductility at break in all the four directions of each fluororesin film was 100% or more. According to the fluororesin film of the present embodiment, ductility at break in the four directions is rendered to be 100% or more, and chemical resistance can be ensured as well.

### «Evaluation of adhesion»

In the examples, fluorine-based laminated films of 21 samples (Examples A1 to A12, and Comparative Examples A1 to A9) shown in Table 3 were evaluated for adhesion between the fluororesin film and an adhesive layer.

**[Table 3]**

| | Hot-melt adhesive (Main resin) | | | Curing agent | | Formulation ratio (Main resin/Curing agent) | Adhesion evaluation (Number of nondefective evaluations /Number of evaluations) |
|---|---|---|---|---|---|---|---|
| | Main resin 1 (Tg = 49°C) | Main resin 2 (Tg = 65°C) | Main resin 3 (Tg = 8 °C) | Curing agent 1 | Curing agent 2 | | |
| Comparative Example A1 | Present | - | - | - | - | - | 0/3 |
| Comparative Example A2 | - | Present | - | - | - | | 0/3 |
| Comparative Example A3 | - | - | Present | - | - | | 3/3 |
| Example A1 | Present | - | - | Present | - | 100/1.8 | 3/3 |
| Example A2 | Present | - | - | - | Present | | 3/3 |
| Example A3 | - | Present | - | Present | - | | 3/3 |
| Example A4 | - | Present | - | - | Present | | 3/3 |
| Example A5 | - | - | Present | Present | - | | 3/3 |
| Example A6 | - | - | Present | - | Present | | 3/3 |
| Example A7 | Present | - | - | Present | - | 100/3.6 | 3/3 |
| Example A8 | Present | - | - | - | Present | | 3/3 |
| Example A9 | - | Present | - | Present | - | | 3/3 |
| Example A10 | - | Present | - | - | Present | | 3/3 |
| Example A11 | - | - | Present | Present | - | | 3/3 |
| Example A12 | - | - | Present | - | Present | | 3/3 |
| Comparative Example A4 | Present | - | - | Present | - | 100/7.2 | 3/3 |
| Comparative Example A5 | Present | - | - | - | Present | | 3/3 |
| Comparative Example A6 | - | Present | - | Present | - | | 3/3 |
| Comparative Example A7 | - | Present | - | - | Present | | 3/3 |
| Comparative Example A8 | - | - | Present | Present | - | | 3/3 |
| Comparative Example A9 | - | - | Present | - | Present | | 3/3 |

### <Samples of Table 3>

The fluorine-based laminated films of all samples (Examples A1 to A12, and Comparative Examples A1 to A9) shown in Table 3 were bonded to respective plate-shaped polycarbonates (resin plates), i.e., substrates, by means of a thermal lamination apparatus set to 140°C, 0.3 MPa, and 0.2 m/min speed.

The fluororesin films of all samples (Examples A1 to A12, and Comparative Examples A1 to A9) were prepared with a thickness of 50 µm through the solution casting method stated above. The fluorine-based laminated films of all samples (Examples A1 to A12, and Comparative Examples A1 to A9) were prepared by applying an adhesive, serving as an adhesive layer, to a surface of a surface-treated, e.g., corona-treated, fluororesin film, so as to have a thickness of 5 µm, followed by aging at 50°C for 3 days.

The fluorine-based laminated films of Examples A1 to A12 and Comparative Examples A4 to A9 of Table 3 each included an adhesive layer that contained a main resin (hot-melt adhesive) and a curing agent.

The adhesive layers of the fluorine-based laminated films of Examples A1 to A12 and Comparative Examples A4 to A9 were each formed by combining a main resin selected from three types and a curing agent selected from two types. In Table 3, the term present indicates the presence of a main resin selected from the three types or a curing agent selected from the two types.

The main resin 1 in Table 3 is a polyester resin PES-316SBM40 (glass transition temperature (Tg) = 49°C) manufactured by Toagosei Co., Ltd. The main resin 2 is a polyester resin PES-360HVXM30 (Tg = 65°C) manufactured by Toagosei Co., Ltd. The main resin 3 is a polyester resin PES-310S30 (Tg = 8°C) manufactured by Toagosei Co., Ltd.

The curing agent 1 in Table 3 is an XDI curing agent (TAKENATE D-110N manufactured by Mitsui Chemicals, Inc.). The curing agent 2 is an H6XDI curing agent (TAKENATE D-120N manufactured by Mitsui Chemicals, Inc.).

In Examples A1 to A12 and Comparative Examples A4 to A9, three formulation ratios of a main resin and a curing agent were used.

The fluorine-based laminated films of Examples A1 to A6 included respective adhesive layers each containing 1.8 parts by mass of a curing agent relative to 100 parts by mass of a main resin. In this case, the ratio of the OH group (hydroxyl group) to the NCO group (isocyanate group) of the curing agent was 2 : 1 (OH/NCO = 2/1). The fluorine-based laminated films of Examples A7 to A12 included respective adhesive layers each containing 3.6 parts by mass of a curing agent relative to 100 parts by mass of a main resin (OH/NCO = 1/1). The fluorine-based laminated films of Comparative Examples A4 to A9 included respective adhesive layers each containing 7.2 parts by mass of a curing agent relative to 100 parts by mass of a main resin (OH/NCO = 1/2).

In the fluorine-based laminated films of Comparative Examples A1 to A3 of Table 3, the adhesive layers were each made of only the three types of main resins.

### <Method of evaluating adhesion>

The samples shown in Table 3 were evaluated for adhesion according to JIS K5600. Specifically, each fluororesin film bonded to polycarbonate as a substrate was cross-cut into 25 separate 2-mm squares, followed by a tape peel test for the fluororesin film. As a result of the tape peel test, if none of the squares of the fluororesin film was peeled off, the sample was evaluated as being nondefective, and if even one of the squares was peeled off, the sample was evaluated as being defective.

The samples were each evaluated for adhesion three times. The column of adhesion evaluation of Table 3 shows the number of evaluations of adhesion and the number of nondefective evaluations for each sample.

As shown in Table 3, Comparative Examples A1 and A2 including adhesive layers made of only a main resin with a high glass transition temperature (Tg) were both evaluated as being defective in terms of adhesion all three times. Specifically, in Comparative Examples A1 and A2, adhesion between the fluororesin film and the adhesive layer was not ensured.

Examples A1 to A12 and Comparative Examples A4 to A9 including adhesive layers that contained a main resin and a curing agent and Comparative Example A3 including an adhesive layer made of only a main resin with a low glass transition temperature (Tg) of 8°C were evaluated as being nondefective all of three times in terms of adhesion. Specifically, in Examples A1 to A12 and Comparative Examples A3 to A9, adhesion between the fluororesin film and the adhesive layer was ensured.

However, in Examples A5, A6, A11, and A12 and Comparative Examples A3, A8, and A9 in which the glass transition temperature (Tg) of the main resin was 8°C, the adhesive layer had high viscoelasticity at a normal temperature, and thus ease of handling of the fluorine-based laminated film was not high. In Examples A1 to A4 and A7 to A10 and Comparative Examples A4 to A7 in which the glass transition temperature (Tg) of the main resin was 40°C or more, viscoelasticity of the adhesive layer was minimized at a normal temperature, and handling of the fluorine-based laminated film was easy.

### «Evaluation of adhesion and measurement of strength»

In the examples, 10 samples (Examples B1 to B8, and Comparative Examples B1 and B2) of fluorine-based laminated films shown in Tables 4 and 5 were evaluated for adhesion, similarly to Table 3, and measured for strength (adhesion strength) of the fluororesin film and the substrate by conducting a peel test.

**[Table 4]**

| | Formulation ratio (Main resin/ Curing agent) | Coating thickness (µm) | Aging condition | Peel test | | | Adhesion evaluation |
|---|---|---|---|---|---|---|---|
| | | | | 180° | | Peeling interface | |
| | | | | Strength (N/10 mm) | Breakage state | | |
| Example B1 | 100/3.6 | 1 | 50°C 3 days | 7 | - | Adhesive/PC | A |
| Example B2 | 100/3.6 | 3 | 50°C 3 days | 8.6 | - | Adhesive/PC | A |
| Example B3 | 100/3.6 | 4 | 50°C 3 days | 14.8 | - | Adhesive/PC | A |
| Example B4 | 100/3.6 | 5 | 50°C 3 days | 14.1 | - | Adhesive/PC | A |
| Example B5 | 100/3.6 | 7 | 50°C 3 days | 14.7 | - | Adhesive/PC | A |

**[Table 5]**

| | Formulation ratio (Main resin/Curing agent) | Coating thickness (µm) | Aging condition | Peel test | | | Adhesion evaluation |
|---|---|---|---|---|---|---|---|
| | | | | 180° | | Peeling interface | |
| | | | | Strength (N/10 mm) | Breakage state | | |
| Comp. Example B1 | 100/0 | 5 | 50°C 3 days | 0.2 | - | PVDF/Adhesive | B |
| Example B6 | 100/1 | 5 | 50°C 3 days | 10.1 | - | PVDF/Adhesive | A |
| Example B4 | 100/3.6 | 5 | 50°C 3 days | 14.1 | - | Adhesive/PC | A |
| Example B7 | 100/5 | 5 | 50°C 3 days | 14 | - | PVDF/Adhesive | A |
| Example B8 | 100/6 | 5 | 50°C 3 days | 14.5 | - | PVDF/Adhesive | A |
| Comp. Example B2 | 100/7.2 | 5 | 50°C 3 days | 3.6 | - | Cohesion | A |

### <Samples of Tables 4 and 5>

The fluorine-based laminated films of all samples (Examples B1 to B8, and Comparative Examples B1 and B2) shown in Tables 4 and 5 were bonded to respective plate-shaped polycarbonates (resin plates), i.e., substrates, by means of a thermal lamination apparatus of 140°C, 0.3 MPa, and 0.2 m/min speed.

The fluororesin films of all samples (Examples B1 to B8, and Comparative Examples B1 and B2) were prepared with a thickness of 50 µm by the solution casting method mentioned above.

The adhesive layers of all samples (Examples B1 to B8, and Comparative Examples B1 and B2) contained a main resin (adhesive) and a curing agent. As the main resin, the aforementioned main resin 2 was used, and as the curing agent, the aforementioned curing agent 1 was used.

The fluorine-based laminated films of all samples (Examples B1 to B8, and Comparative Examples B1 and B2) were each prepared by applying an adhesive, which served as an adhesive layer, to a surface of a surface-treated, e.g., corona-treated, fluororesin film, followed by aging under predetermined conditions. The adhesive applied to the fluororesin film contained solid contents that contained the main resin and the curing agent which were diluted with a solvent such as toluene so as to be 30% by mass.

### <Samples of Table 4>

The fluorine-based laminated films of Examples B1 to B5 of Table 4 had respective adhesive layers with a different thickness (coating thickness).

The fluorine-based laminated films of Examples B1 to B5 of Table 4 included respective adhesive layers each containing 3.6 parts by mass of the curing agent relative to 100 parts by mass of the main resin. The fluorine-based laminated films of Examples B1 to B5 were each prepared by applying an adhesive, which served as an adhesive layer, to a surface of a surface-treated, e.g., corona-treated, fluororesin film, followed by aging at 50°C for 3 days.

### <Samples of Table 5>

The fluorine-based laminated films of Examples B4 and B6 to B8 and Comparative Example B2 of Table 5 had respective adhesive layers with a different formulation ratio of the main resin and the curing agent. In the fluorine-based laminated film of Comparative Example B1, the adhesive layer was made of only the main resin.

The fluorine-based laminated films of Examples B4 and B6 to B8 and Comparative Examples B1 and B2 of Table 5 were each prepared by applying an adhesive, which served as an adhesive layer, to a surface of a surface-treated, e.g., corona-treated, fluororesin film so as to have a thickness of 5 µm, followed by aging at 50°C for 3 days.

### <Method of evaluating adhesion>

The samples of Tables 4 and 5 were evaluated for adhesion similarly to the samples of Table 3. However, adhesion was evaluated once for each sample. In Tables 4 and 5, evaluation as being nondefective (none of the squares being peeled off) was indicated with A, and evaluation as being defective (one or more squares being peeled off) was indicated with B.

### <Method of peel test>

The peel test for the samples of Tables 4 and 5 was conducted according to JIS Z0237. Specifically, the peel test was conducted by peeling off the substrate and the fluororesin film in a direction parallel to the surfaces thereof. In the peel test, the strength (unit: N/10 mm) at the time of peel-off of the fluororesin film from the substrate was measured. In the peel test, the interface from which the substrate and the fluororesin film were peeled off was evaluated by observing the appearance (visual observation). The following criteria were used for evaluating peeling at interface.
Adhesive/PC: Breakage occurred at the interface between the adhesive layer and the substrate.
PVDF/Adhesive: Breakage occurred at the interface between the fluororesin film and the adhesive layer.
Cohesion: Breakage occurred in the adhesive layer (cohesive failure occurred).

In the peel test, the state after peel-off of the fluororesin film from the substrate (peeling state) was evaluated by observing the appearance. In Tables 4 and 5, the mark "-" indicates the substrate and the fluororesin film being peeled off without being split. In the tables, "split" indicates that, the fluororesin film or the substrate was split during peel-off and only part thereof was peeled off.

As shown in Table 4, Examples B1 to B5 were all evaluated as being nondefective in respect of adhesion. As a result of the peel test, Examples B1 to B5 all exhibited a strength of 5 (N/10 mm) or more.

As a result of the peel test, Examples B1 to B5 all suffered from breakage at the interface between the adhesive layer and the substrate. Thus, adhesion between the fluororesin film and the adhesive layer can be ensured, regardless of the thickness of the adhesive layer.

Further studying the strength measured in the peel test, Examples B3 to B5 having an adhesive layer with a large thickness of 4 µm or more exhibited a strength of 10 (N/10 mm) or more. Specifically, the adhesive layer with a thickness of 4 µm or more achieved very strong adhesion between the fluororesin film and the substrate.

As shown in Table 5, Comparative Example B1 having an adhesive layer made of only the main resin was evaluated as being defective in respect of adhesion. Specifically, in Comparative Example B1, adhesion between the fluororesin film and the adhesive layer was not ensured. Examples B4 and B6 to B8 and Comparative Example B2 each having an adhesive layer containing both the main resin and the curing agent were all evaluated as being nondefective in respect of adhesion. Specifically, the adhesive layers containing both the main resin and the curing agent could ensure adhesion between the fluororesin film and the adhesive layer.

Studying the strength measured in the peel test, however, Comparative Examples B1 and B2 had a strength of less than 5 (N/10 mm). Examples B4 and B6 to B8 exhibited a strength of 5 (N/10 mm) or more. Specifically, the adhesive layer containing 1 to 6 parts by mass of the curing agent relative to 100 parts by mass of the main resin achieved adhesion between the fluororesin film and the substrate with a very high strength.

### «Evaluation of blocking»

In the examples, four samples (Examples C1 to C4) of fluorine-based laminated films shown in Table 6, with surfaces of each being overlapped with each other, were evaluated for blocking (sticking) between the surfaces.

**[Table 6]**

| | Main resin | Curing agent | Formulation ratio (Main resin/Curing agent) | Load | Evaluation of blocking | | |
|---|---|---|---|---|---|---|---|
| | | | | | PVDF/Adhesive | OPP/Adhesive | PET/Adhesive |
| Example C1 | 1 | 1 | 100/3.6 | 30 kg/cm² | 1 | 4 | 3 |
| Example C2 | 1 | 1 | 100/3.6 | 70 kg/cm² | 1 | 4 | 2 |
| Example C3 | 2 | 1 | 100/3.6 | 30 kg/cm² | 3 | 5 | 5 |
| Example C4 | 2 | 1 | 100/3.6 | 70 kg/cm² | 3 | 5 | 5 |

### <Samples of Table 6>

The fluororesin film samples (Examples C1 to C4) shown in Table 6 were all prepared with a thickness of 50 µm through the solution casting method mentioned above. The fluorine-based laminated films of all samples (Examples C1 to C4) were prepared by applying an adhesive, serving as an adhesive layer, to a surface of a surface-treated, e.g., corona-treated, fluororesin film, so as to have a thickness of 5 µm.

All the samples (Examples C1 to C4) had respective adhesive layers containing a main resin (adhesive) and a curing agent. All the samples (Examples C1 to C4) included respective adhesive layers containing 3.6 parts by mass of the curing agent relative to 100 parts by mass of the main resin. All the samples (Examples C1 to C4) used the aforementioned curing agent 1 as the curing agent.

Examples C1 and C2 used the aforementioned main resin 1 as the main resin of the adhesive layer. Examples C3 and C4 used the aforementioned main resin 2 as the main resin of the adhesive layer.

### <Method of evaluating blocking>

The samples of Table 6 were evaluated for blocking as follows.

First, an adhesive, serving as an adhesive layer, was applied to a surface of a surface-treated, e.g., corona-treated, fluororesin film to obtain a fluorine-based laminated film.

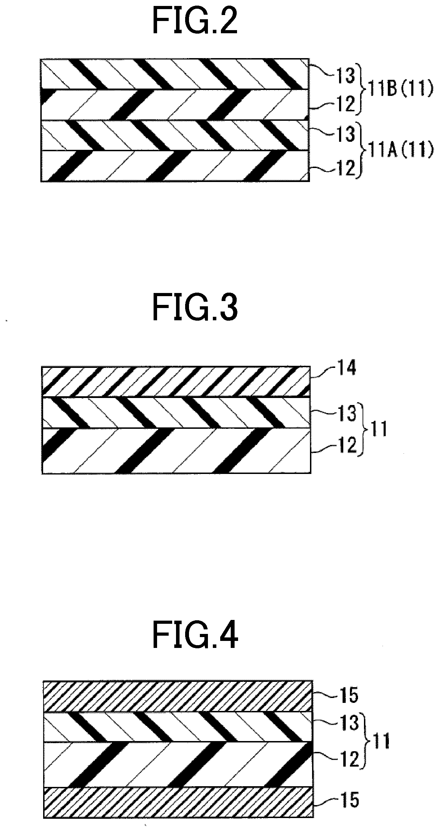

Then, two 10-cm square test samples were cut out from each fluorine-based laminated film, and these two samples were overlapped with each other. As shown in Fig. 2, in the state where the two fluorine-based laminated films as cut-out samples are overlapped, the surface of the adhesive layer 13 of one fluorine-based laminated film 11A contacts the surface of the fluororesin film 12 of the other fluorine-based laminated film 11B.

Subsequently, these two films 11A and 11B were aged at 50°C for 3 days, with the imposition of a predetermined load thereon in the overlapped direction (direction perpendicular to the surfaces of the two films 11A and 11B) by means of a blocking tester, not shown, and then the two films 11A and 11B were peeled off from each other by the operator by hand.

Examples C1 and C3 had a load of 30 (kg/cm²) imposed on them, and Examples C2 and C4 had a load of 70 (kg/cm²) imposed on them (see Table 6).

Blocking was evaluated by the operator feeling resistance when peeling off the fluorine-based laminated films by hand, that is, evaluated through sensory evaluation. The following criteria were used for the evaluation, and samples evaluated as being 3 or more were taken to be nondefective. Evaluations of blocking for the configuration of Fig. 2 are shown in the column of PVDF/adhesive of Table 6.
1: Stuck together and not peeled off.
2: Peeled off with resistance (large) felt.
3: Peeled off with resistance (medium) felt.
4: Peeled off with resistance (small) felt.
5: Peeled off with no resistance felt.

The samples (Examples C1 to C4) of fluorine-based laminated films were also similarly evaluated for blocking after being aged at 50°C for 3 days with the imposition of a predetermined load. As shown in Fig. 3, these samples each had a configuration where a separate paper 14 (unprocessed OPP film) was overlapped on an adhesive layer 13 of a fluorine-based laminated film 11. Specifically, blocking was evaluated through sensory evaluation at the time of the operator peeling off the fluorine-based laminated film 11 by hand from the separate paper 14. Evaluations of blocking for the configuration of Fig. 3 are shown in the column of OPP/adhesive of Table 6.

The samples (Examples C1 to C4) of fluorine-based laminated films were also similarly evaluated for blocking after being aged at 50°C for 3 days with the imposition of a predetermined load. As shown in Fig. 4, these samples each had a configuration where a PET film 15 was overlapped on an adhesive layer 13 of a fluorine-based laminated film 11. The PET film 15 in this case constituted a base surface when the fluororesin film 12 was formed by the solution casting method. Specifically, blocking was evaluated through sensory evaluation at the time of the operator peeling off the fluorine-based laminated film 11 by hand from the PET film 15 on the adhesive layer 13. Evaluations of blocking for the configuration of Fig. 4 are shown in the column of PET/adhesive of Table 6.

As shown in Table 6, in Examples C1 and C2 containing a main resin whose glass transition temperature (Tg) was lower than 50°C, the two 11A and 11B, when overlapped with each other as shown in Fig. 2, were not peeled off from each other, regardless of the magnitude of the imposed load. Specifically, when the films 11A and 11B of Examples C1 and C2 are overlapped with each other, the separate paper 14 shown in Fig. 3 or the PET film 15 shown in Fig. 4 needs to be interposed between the two films 11A and 11B.

In contrast, in Examples C3 and C4 containing a main resin whose glass transition temperature (Tg) was 50°C or more, the two films 11A and 11B, even when overlapped with each other as shown in Fig. 2, were relatively easily peeled off from each other. Thus, according to Examples C3 and C4, the films 11A and 11B can be stored after being taken up in a roll without interposition of the separate paper 14, the PET film 15, or the like.

In Example C4 containing a main resin whose glass transition temperature (Tg) was 50°C or more, the two films 11A and 11B, even when a large load (70 kg/cm²) was imposed, were relatively easily peeled off from each other. Thus, according to Examples C3 and C4, a long fluorine-based laminated film (e.g., with a length of 1000 m) can be stored after being taken up in a roll.

In Examples C1, C3, and C4, the PET film 15 was relatively easily peeled off from the adhesive layer 13 of the fluorine-based laminated film 11, in the case where the PET film 15 was not peeled off, as shown in Fig. 4, from the fluororesin film 12 after forming the fluororesin film 12. Thus, according to Examples C1, C3, and C4 in which the PET film 15 is bonded to a surface of the fluororesin film 12, the fluorine-based laminated film 11 can be aged in a state of being taken up in a roll without interposition of the separate paper 14 (see Fig. 3) immediately after applying an adhesive serving as the adhesive layer 13 to the other surface of the fluororesin film 12. Accordingly, the fluorine-based laminated film 11 can be produced in a compact space.

According to Examples C3 and C4, even when the PET film 15 as shown in Fig. 4 is peeled off from the fluororesin film 12 after forming the fluororesin film 12, the fluorine-based laminated film 11 can be aged in a state of being taken up in a roll immediately after the adhesive serving as the adhesive layer 13 is applied to the fluororesin film 12.

### <Samples of Table 7>

To evaluate examples described below, fluororesin films were produced by using seven dispersion liquid samples (Example D1, and Comparative Examples D1 to D6) shown in Table 7.

When producing fluororesin films by using the seven dispersion liquid samples, each dispersion liquid was prepared by dispersing a resin material containing particulate vinylidene fluoride resin (VDF) and an acrylic polymer in a solvent containing a good solvent for VDF. The seven dispersion liquid samples were each obtained by mixing and stirring the resin material and the solvent at a normal temperature.

Table 7 shows part of parameters of the seven dispersion liquid samples.

The seven dispersion liquid samples contained respective particulate VDFs which were all homopolymers that were different only in average primary particle size. The average primary particle size of particulate VDF was 3.98 µm in Example D1 and Comparative Examples D1 to D4, 6.43 µm in Comparative Example D5, and 5.4 µm in Comparative Example D6.

The seven samples all contained polymethylmethacrylate (PMMA) as an acrylic polymer.

In Example D1 and Comparative Examples D3 to D6, the resin material in the dispersion liquid contained 70 parts by mass of VDF and 30 parts by mass of acrylic polymer relative to 100 parts by mass of the total of VDF and the acrylic polymer.

In Comparative Example D1, the resin material in the dispersion liquid contained 75 parts by mass of VDF and 25 parts by mass of acrylic polymer relative to 100 parts by mass of the total of VDF and the acrylic polymer.

In Comparative Example D2, the resin material in the dispersion liquid contained 60 parts by mass of VDF and 40 parts by mass of acrylic polymer relative to 100 parts by mass of the total of VDF and the acrylic polymer.

The seven samples all contained N-methylpyrrolidone (NMP) as good solvent in the solvent. The seven samples all contained diethylene glycol monobutyl ether (DEB) as another solvent in the solvent other than the good solvent.

In Example D1 and Comparative Examples D1, D2, D5, and D6, the solvent contained 15 parts by mass of NMP and 85 parts by mass of DEB relative to 100 parts by mass of the entire solvent.

In Comparative Example D3, the solvent contained 5 parts by mass of NMP and 95 parts by mass of DEB relative to 100 parts by mass of the entire solvent.

In Comparative Example D4, the solvent contained 40 parts by mass of NMP and 60 parts by mass of DEB relative to 100 parts by mass of the entire solvent.

The dispersion liquid samples of s were each permitted to contain an ultraviolet absorber (UVA) and a hindered amine light stabilizer (HALS) as additives. A benzotriazole ultraviolet absorber was used as the UVA. In each of the seven samples, the dispersion liquid contained 3 parts by mass of UVA relative to 100 parts by mass of the total of VDF and acrylic polymer. In each of the seven samples, the dispersion liquid contained 1.5 parts by mass of HALS relative to 10 parts by mass of UVA.

**[Table 7]**

| | Average primary particle size of VDF (µm) | VDF : Acryl (Weight ratio) | DEB: NMP (Weight ratio) |
|---|---|---|---|
| Example D1 | 3.98 | 70 : 30 | 80 : 15 |
| Comparative Example D1 | 3.98 | 75 : 25 | 85 : 15 |
| Comparative Example D2 | 3.98 | 60 : 40 | 85 : 15 |
| Comparative Example D3 | 3.98 | 70 : 30 | 95 : 5 |
| Comparative Example D4 | 3.98 | 70 : 30 | 60 : 40 |
| Comparative Example D5 | 6.43 | 70 : 30 | 85 : 15 |
| Comparative Example D6 | 5.4 | 70 : 30 | 85 : 15 |

Using the seven dispersion liquid samples (Example D1, Comparative Examples D1 to D6), fluororesin films each having a thickness of 30 µm were attempted to be produced through a solution casting method.

Using six dispersion liquid samples (Example D1, Comparative Examples D1 to D3, D5, and D6), fluororesin films were produced. In the dispersion liquid of Comparative Example D4, viscosity was excessively increased, disabling production of fluororesin film through the solution casting method. The cause of excessive increase in viscosity of the dispersion liquid resides in that the solvent containing 40 parts by mass of NMP (good solvent) relative to 100 parts by mass of the entire solvent permitted NMP to excessively act on VDF, thereby permitting excessive dissolution of VDF.

The produced six fluororesin films were measured for haze and ductility at break, and evaluated for solvent resistance.

### <Method of measuring haze>

A hazemeter (NDH2000 manufactured by Nippon Denshoku Industries Co., Ltd.) was used for the measurement of haze. Haze was measured using a method according to JIS K7136. Haze is an indicator of film transparency and is indicated by a ratio (%) of diffused transmitted light relative to total transmitted light that has passed through the film. That is, higher haze means lower transparency of the film, and lower haze means higher transparency of the film.

### <Measurement of ductility at break>

A specimen was cut out with a size of 25-mm width × 125-mm length from each fluororesin film sample. For the cut-out specimens, ductility at break was measured at a temperature of 23 ± 2°C and a humidity of 50 ± 5 %RH with a gauge length of 50 mm and at a speed of 50 mm/min.

### <Method of evaluating solvent resistance>

A specimen was cut out with a size of 15-mm width × 150-mm length from each fluororesin film sample. For the cut-out specimens, solvent resistance was evaluated by appearance observation (visual observation) after being immersed in toluene or ethyl acetate for 15 minutes at a temperature of 23 ± 2°C and a humidity of 50 ± 5 %RH. The following evaluation criteria were used, with A taken to be nondefective.
A: No appearance change was observed.
B: Wrinkling was observed.
C: Elution was observed.

Table 8 shows measurements of haze, measurements of ductility at break, and evaluations of solvent resistance conducted for six fluororesin film samples (Example D1, and Comparative Examples D1 to D3, D5, and D6) produced by using the six dispersion liquid samples (Example D1, and Comparative Examples D1 to D3, D5, and D6) of Table 7.

**[Table 8]**

| | Haze (%) | Ductility at break (%) | Solvent resistance | |
|---|---|---|---|---|
| | | | Toluene | Ethyl acetate |
| Example D1 | 4.0 | 220 | A | A |
| Comparative Example D1 | 18.0 | 100 | A | A |
| Comparative Example D2 | 1.6 | 240 | A | B |
| Comparative Example D3 | 12.2 | 220 | A | A |
| Comparative Example D4 | Failed to form film due to increase in viscosity of dispersion liquid | | | |
| Comparative Example D5 | 13.9 | 250 | A | A |
| Comparative Example D6 | 16.3 | 260 | A | A |

As shown in Table 8, haze had a high value of 12.2% or more in Comparative Example D1 which contained 25 parts by mass of acrylic polymer relative to 100 parts by mass of the total of VDF and acrylic polymer, Comparative Example D3 in which the dispersion liquid contained 5 parts by mass of NMP relative to 100 parts by mass of the entire solvent, and Comparative Examples D5 and D6 in which the average primary particle size of particulate VDF in the dispersion liquid was 5.4 µm or more. That is, sufficient transparency was not ensured in the fluororesin films of Comparative Examples D1, D3, D5, and D6.

On the other hand, haze had a low value of 4.0% or less in Example D1 and Comparative Example D2 which contained more than 25 parts by mass of acrylic polymer relative to 100 parts by mass of the total of VDF and acrylic polymer, with the dispersion liquid containing 15 parts by mass of NMP relative to 100 parts by mass of the entire solvent, and with the average primary particle size of VDF in the dispersion liquid being less than 4 µm. That is, sufficient transparency was ensured in the fluororesin films of Example D1 and Comparative Example D2.

As shown in Table 8, the fluororesin films of Example D1 and Comparative Examples D1 to D3, D5, and D6 exhibited ductility at break of 100% or more, ensuring high ductility. In the fluororesin films of Example D1 and Comparative Examples D1, D3, D5, and D6 where the parts by mass ratio of acrylic polymer relative to 100 parts by mass of the total of VDF and acrylic polymer were comparatively larger than in Comparative Example D2, ductility at break was higher than in Comparative Example D2, ensuring higher ductility.

As shown in Table 8, in Comparative Example D2 which contained 40 parts by mass of acrylic polymer relative to 100 parts by mass of the total of VDF and acrylic polymer, resistance (solvent resistance) to toluene was ensured, but resistance (solvent resistance) to ethyl acetate was not ensured.

On the other hand, in Example D1 and Comparative Examples D1, D3, D5, and D6 which contained less than 40 parts by mass of acrylic polymer relative to 100 parts by mass of the total of VDF and the acrylic polymer, resistance (solvent resistance) to toluene and resistance (solvent resistance) to ethyl acetate were ensured.

Thus, it was confirmed that only the fluororesin film of Example D1 ensured all of high ductility, solvent resistance, and transparency.

The embodiments of the present invention have so far been described. However, configurations, combinations of the configurations, and the like of the embodiments are only examples, and additions, omissions, substitutions, or any other changes in configurations may be made without departing from the spirit of the present invention. The present invention should not be limited to these embodiments.

### [Reference Signs List]

1, 12: Fluororesin film
2, 2A, 2B, 2C, 2D: Specimen
3: Side of fluororesin film 1
11, 11A, 11B: Fluorine-based laminated film
13: Adhesive layer
14: Separate paper
15: PET film

## Claims

1. A fluororesin film,
comprising a vinylidene fluoride polymer as a main component, wherein:
the fluororesin film has ductility at break of 100% or more in all of four different directions of the fluororesin film, and difference in ductility at break between the four directions is 15% or less.

2. The fluororesin film as set forth in claim 1, wherein the vinylidene fluoride polymer contains a copolymer obtained by copolymerization of vinylidene fluoride and a second monomer.

3. The fluororesin film as set forth in claim 2, wherein the second monomer is contained in the vinylidene fluoride polymer in the range of 1 part by mass or more and less than 10 parts by mass relative to 100 parts by mass of the entire vinylidene fluoride polymer.

4. The fluororesin film as set forth in any one of claims 1 to 3, wherein heat of fusion based on DSC measurement is in the range of 30 to 40 (J/g).

5. The fluororesin film as set forth in any one of claims 1 to 4, further comprising at least one of an acrylic polymer and a pigment.

6. A laminate comprising:
a substrate formed into a plate shape or a sheet shape; and
the fluororesin film set forth in any one of claims 1 to 5 bonded to a surface of the substrate.

7. A method of producing a fluororesin film, comprising:
applying a coating liquid containing a vinylidene fluoride polymer as a main component onto a substrate;
forming a coating film by heating and drying the substrate onto which the coating liquid has been applied; and
peeling off the formed coating film from the substrate, wherein:
the coating film has difference in ductility at break of 15% or less between four different directions of the coating film.

8. The method of producing a fluororesin film as set forth in claim 7, wherein the substrate has asperities on a surface onto which the coating liquid is applied, the asperities being for assisting forming the coating film.

9. A fluorine-based laminated film comprising:
a fluororesin film containing a vinylidene fluoride polymer as a main component; and
an adhesive layer provided to a surface of the fluororesin film, wherein:
the adhesive layer contains a main resin and a curing agent, the main resin being composed of a thermoplastic adhesive; and
the adhesive layer contains 1 to 6 parts by mass of the curing agent relative to 100 parts by mass of the main resin.

10. The fluorine-based laminated film as set forth in claim 9, wherein:
the main resin contains a polyester resin as a main component; and
the main resin has a glass transition temperature (Tg) of 40°C or more.

11. A method of producing a fluororesin film, comprising:
preparing a dispersion liquid by dispersing a resin material in a solvent, the resin material being a mixture of a particulate vinylidene fluoride resin having an average primary particle size of 4 µm or less and an acrylic polymer, the solvent containing a first solvent in which the vinylidene fluoride resin is dissolved; and
forming a film from the dispersion liquid through a solution casting method, wherein:
the resin material contains the vinylidene fluoride resin in the range of more than 60 parts by mass and less than 75 parts by mass, and contains the acrylic polymer in the range of more than 25 parts by mass and less than 40 parts by mass, so that a total of the vinylidene fluoride resin and the acrylic polymer is 100 parts by mass; and
when the dispersion liquid is prepared, the solvent contains the first solvent in the range of more than 5 parts by mass and less than 40 parts by mass, so that the prepared dispersion liquid is 100 parts by mass in total.

12. The method of producing a fluororesin film as set forth in claim 11, wherein the first solvent contains at least one organic solvent selected from N-methylpyrrolidone, methyl ethyl ketone, dimethylacetamide, and N,N-dimethylformamide.

13. The method of producing a fluororesin film as set forth in claim 11 or 12, wherein:
the dispersion liquid contains 1 to 15 parts by mass of an ultraviolet absorber relative to 100 parts by mass of the total of the vinylidene fluoride resin and the acrylic polymer; and
the dispersion liquid further contains 1 to 5 parts by mass of a hindered amine light stabilizer relative to 10 parts by mass of the ultraviolet absorber.
